# EUROPEAN PATENT APPLICATION

(11) **EP 3 772 429 A1**
(43) Date of publication of application: **10.02.2021**
(21) Application number: 19190791.4
(22) Date of filing: 08.08.2019
(51) Int. Cl.: B60L 53/60, B60L 53/66, B60L 53/68, B60L 58/12, G01C 21/34, G01C 21/36, G06Q 10/02, G06Q 30/06, G06Q 50/06

(54) **METHOD FOR CONTROLLING A LOW FUEL OR LOW CHARGE WARNING SYSTEM IN A VEHICLE**

(71) Applicant: Ningbo Geely Automobile Research & Development Co., Ltd., Ningbo, Zhejiang 315336 (CN)
(72) Inventor: HAGSTRÖM, Albin, 41545 GÖTEBORG (SE); LINDBERG NILSSON, Erik, 41747 GÖTEBORG (SE)
(74) Representative: Zacco Sweden AB

(57) **Abstract**

The present disclosure relates to a method for controlling a low fuel or low charge warning system in a vehicle (1). The method comprises calculating an estimated driving range (10) of the vehicle (1), identifying upcoming vehicle energy supply stations (11, 12, 25, 26, 27) along a planned driving route (13) or in a traveling direction of the vehicle (1), and within estimated driving range (10) of the vehicle (1), determining estimated waiting times for gaining access to a fuel pump or electrical charger for said upcoming vehicle energy supply stations (11, 12, 25, 26, 27), and controlling a low fuel or low charge warning trigger level of the low fuel or low charge warning system while taking into account the estimated waiting times. The present disclosure also relates to a corresponding system.

## Description

### TECHNICAL FIELD

The disclosure relates to method for controlling low fuel or low charge warning system in a vehicle. The disclosure also relates to a low fuel or low charge warning system for a vehicle.

The method and system according to the disclosure can be arranged in any type of road vehicle suitable for conducting longer travels and that needs to stop for occasional refuelling or charging of a vehicle electrical storage system.

Specifically, although the method and system according to the disclosure is described primarily in relation to a car, the method and system according to the disclosure is not restricted to this particular type of vehicle, but may alternatively be implemented in other type of vehicles such as trucks, buses, motorcycles, etc.

### BACKGROUND ART

In the field of vehicle road transport of people or goods, there is a demand for providing smart refuelling and charging assistance for enabling convenient, cost-efficient and quick refuelling and charging of propulsion battery.

A smart fuel indicator that provides a fuel alert based on range to fuel station is for example known from US 9,506,775 B2.

However, despite the activities in the field, there is a demand for a further improved low fuel or low charge warning system, in particular in terms of convenient, safe, cost-efficient and quick refuelling of fuel tank or charging of propulsion battery.

### SUMMARY OF THE DISCLOSURE

This section provides a general summary of the disclosure, and is not a comprehensive disclosure of its full scope or all of its features.

A general object of the present disclosure is to provide a method for controlling a low fuel or low charge warning system in a vehicle, and low fuel or low charge warning system for a vehicle, that enables a more convenient, safe, cost-efficient and quick refuelling of and charging of propulsion battery.

These and other objects, which will become apparent in the following, are accomplished by a method and system as defined in the accompanying independent claims.

According to a first aspect of the present disclosure, there is provided a method for controlling a low fuel or low charge warning system in a vehicle, the method comprising: calculating an estimated driving range of the vehicle, identifying upcoming vehicle energy supply stations along a planned driving route or in a traveling direction of the vehicle, and within estimated driving range of the vehicle, determining estimated waiting times for gaining access to a fuel pump or electrical charger for said upcoming vehicle energy supply stations, and controlling a low fuel or low charge warning trigger level of the low fuel or low charge warning system while taking into account the estimated waiting times.

According to a second aspect of the present disclosure, there is provided a low fuel or low charge warning system for a vehicle, the system comprising: a low fuel or low charge warning indicating device, a vehicle fuel tank and/or vehicle electrical storage system (ESS), one or more computer data storage devices including geographical position information of vehicle energy supply stations and information indicative of waiting times for gaining access to fuel pumps or electrical chargers at said vehicle energy supply stations, a vehicle geographical position detection device, and an electronic controller, wherein the electronic controller is configured for: acquiring information about remaining fuel content of the vehicle fuel tank or vehicle ESS charge level and subsequently calculating an estimated driving range of the vehicle, acquiring geographical positioning information from the vehicle geographical position detection device and monitoring vehicle geographical position and driving direction, acquiring geographical position information of vehicle energy supply stations from the one or more computer data storage devices and identifying upcoming vehicle energy supply stations along a planned driving route or in a traveling direction of the vehicle and within estimated driving range of the vehicle, acquiring information indicative of waiting times for gaining access to fuel pumps or electrical chargers at said upcoming vehicle energy supply stations from said one or more computer data storage devices and determining estimated waiting times for gaining access to a fuel pump or electrical charger for said upcoming vehicle energy supply stations, and controlling a trigger level of the low fuel or low charge warning indicating device while taking into account the estimated waiting times.

In this way, a smart vehicle refuelling or charging assistance system is provided that discretely assists the driver to stop for refuelling or charging at those upcoming vehicle energy supply stations along a travel route having little waiting time for getting access to fuel pumps or electrical chargers at said upcoming vehicle energy supply stations. Specifically, by adapting and using the trigger level of the low fuel or low charge warning indicating device it becomes possible to guide the driver to a suitable vehicle energy supply station in a discrete and intuitive manner, such that driver distraction caused by the driver interaction with the assistance system is kept at a low level for enabling the driver to keep attention on the road and traffic situation and thus for obtaining high driving safety.

By activating the low fuel or low charge warning indicating device at a suitable driving position, the vehicle driver is immediately and with very little driver interaction discretely guided to a suitable vehicle energy supply station, possibly without even knowing that underlying decision logic of the vehicle refuelling or charging assistance system, i.e. to reduced waiting times for getting access to fuel pumps or electrical chargers. This is accomplished by using the driver's intuitive response to an activated low fuel or low charge warning indicating device, namely to stop for refuelling or charging at next available upcoming vehicle energy supply station. In other words, complex and extensive driver distractive interaction for enabling the assistance system to explain and inform the driver that a stop for refuelling or charging at a specific vehicle energy supply station is advantageous for the purpose of avoiding waiting times can be avoided, and the driver is instead sometimes even secretly guided to a vehicle energy supply station having short estimated waiting time, thereby accomplishing a very convenient, safe, cost-efficient and quick refuelling and charging of propulsion battery.

Further advantages are achieved by implementing one or several of the features of the dependent claims. Specifically, according to one example embodiment, the method comprises controlling the low fuel or low charge warning trigger level for guiding the driver to select the vehicle energy supply station having shortest estimated waiting time. Guidance of the driver to a suitable vehicle energy supply station by adapting and using the trigger level of the low fuel or low charge warning indicating device provides a discrete and intuitive guiding with little driver distraction and high driving safety.

According to a further example embodiment, the method comprises controlling the low fuel or low charge warning trigger level for guiding the driver to select the vehicle energy supply station having shortest estimated waiting time by activating low fuel or low charge warning indicating device at a certain distance ahead of arriving at the vehicle energy supply station having shortest estimated waiting time. Thereby the driver has some time to react before passing by a desired vehicle energy supply station.

According to still a further example embodiment, the method comprises controlling a navigation system of the vehicle for guiding the driver to the vehicle energy supply station having shortest estimated waiting time. Thereby the driver may be able to locate a target vehicle energy supply station more easily and conveniently.

According to yet a further example embodiment, the estimated waiting times for gaining access to a fuel pump or electrical charger for said vehicle energy supply stations is determined based on historical data indicative of waiting time for gaining access to a fuel pump or electrical charger. Historical data does not change rapidly over time and may thus be collected and stored and shared to users without need for frequent updates, thereby providing a relatively cost-effective access to data indicative of waiting time.

According to another example embodiment, said historical data is any of the following: historical waiting time for gaining access to a fuel pump or electrical charger, historical popularity of the vehicle energy supply station, historical number of financial transactions related to payments of fuel or electrical charging, historical number of vehicles located at vehicle energy supply station, historical utilisation of the fuel pump or electrical charger. Waiting time data from these sources may be collected and stored relatively cost-effectively and provides a good decision support for the method and system according to the disclosure.

According to yet another example embodiment, the estimated waiting times for gaining access to a fuel pump or electrical charger for said vehicle energy supply stations is determined based on actual number of other vehicles located at the vehicle energy supply stations. This approach provides basic, updated and relevant information about the current status at various vehicle energy supply stations.

According to still another example embodiment, the estimated waiting times for gaining access to a fuel pump or electrical charger for said vehicle energy supply stations are determined based also on the number of other vehicles that are expected to stop at the vehicle energy supply stations before estimated arrival time of the vehicle at said vehicle energy supply stations. This approach even further increases the accuracy and reliability of the estimated waiting times.

According to a further example embodiment, the estimated waiting times for gaining access to a fuel pump or electrical charger for said vehicle energy supply stations are determined based also on expected time point of arrival at the vehicle energy supply stations of said other vehicles that are expected to stop at the vehicle energy supply stations before estimated arrival time of the vehicle at said vehicle energy supply stations. This approach even further increases the accuracy and reliability of the estimated waiting times.

According to still a further example embodiment, the method comprises determining ranges to said upcoming vehicle energy supply stations, and controlling the low fuel or low charge warning trigger level while taking into account also said ranges.

According to another example embodiment, the method comprises determining estimated waiting times for gaining access to a fuel pump or electrical charger only for those upcoming vehicle energy supply stations that are located at a position associated with at least 5%, specifically at least 10%, remaining fuel content or electrical storage system (ESS) charge level, or located at a position at least 20 km, specifically at least 40 km, before end of estimated driving range of the vehicle. Thereby, the risk for fuel shortage or depleted battery caused by driving too long before refuelling or charging is avoided.

According to still another example embodiment, the method comprises determining estimated waiting times for gaining access to a fuel pump or electrical charger only for those upcoming vehicle energy supply stations that are located at a position associated with less than 40%, specifically less than 30%, remaining fuel content or ESS charge level, or located at a position less than 160 km, specifically less than 120 km, before end of estimated driving range of the vehicle. Thereby activation of the low fuel level or low charge level warning is avoided while having relatively high fill level.

According to a further example embodiment, the step of identifying upcoming vehicle energy supply stations along a planned driving route of the vehicle involves including vehicle energy supply stations that are located displaced from the planned driving route of the vehicle and requires up to 100 km, specifically up to 50 km, and more specifically up to 20 km, extra travel distance for passing by, while still being within estimated driving range 10 of the vehicle 1, determining estimated extra travel time for passing by said upcoming vehicle energy supply stations, and controlling the low fuel or low charge warning trigger level of the low fuel or low charge warning system taking into account also the extra travel time for passing by said upcoming vehicle energy supply stations, for guiding the driver to select the vehicle energy supply station having shortest combined estimated waiting time and estimated extra travel time. Thereby, also slightly displaced vehicle energy supply stations may be included into the method for finding vehicle energy supply stations having short combined extra driving and waiting times.

According to still a further example embodiment, the method comprises, when at least three upcoming vehicle energy supply stations along a planned driving route or in a traveling direction of the vehicle are identified, which vehicle energy supply stations are located within estimated driving range of the vehicle and at a position associated with at least 10%, specifically at least 15%, remaining fuel content or ESS charge level or located at a position at least 40 km before end of estimated driving range of the vehicle, determining estimated waiting times for gaining access to a fuel pump or electrical charger only for the two or three upcoming vehicle energy supply stations that are located closest to a position associated with 10%, specifically at least 15%, remaining fuel content or ESS charge level, while being located at a position associated with at least 10%, specifically at least 15%, remaining fuel content or ESS charge level. This corresponds to an alternative approach for avoiding activation of the low fuel level or low charge level warning is avoided while having relatively high fill level.

The present disclosure also relates to vehicle comprising a low fuel or low charge warning system, the system comprising a low fuel or low charge warning indicating device, a vehicle fuel tank and/or vehicle electrical storage system, a vehicle geographical position detection device, and an electronic controller. The electronic controller being configured for acquiring information about remaining fuel content of the vehicle fuel tank and/or vehicle electrical storage system charge level and subsequently calculating an estimated driving range of the vehicle, acquiring geographical positioning information from the vehicle geographical position detection device and monitoring vehicle geographical position and driving direction, acquiring geographical position information of vehicle energy supply stations from one or more computer data storage devices that includes geographical position information of vehicle energy supply stations and information indicative of waiting times for gaining access to fuel pumps or electrical chargers at said vehicle energy supply stations, and identifying upcoming vehicle energy supply stations along a planned driving route or in a traveling direction of the vehicle and within estimated driving range of the vehicle, acquiring information indicative of waiting times for gaining access to fuel pumps or electrical chargers at said upcoming vehicle energy supply stations from said one or more computer data storage devices and determining estimated waiting times for gaining access to a fuel pump or electrical charger for said upcoming vehicle energy supply stations, and controlling a trigger level of the low fuel or low charge warning indicating device while taking into account the estimated waiting times.

Further features of, and advantages with, the present disclosure will become apparent when studying the appended claims and the following description. The skilled person realize that different features of the present disclosure may be combined to create embodiments other than those described in the following, without departing from the scope of the present disclosure.

### BRIEF DESCRIPTION OF THE DRAWINGS

The various example embodiments of the disclosure, including its particular features and example advantages, will be readily understood from the following illustrative and non-limiting detailed description and the accompanying drawings, in which:
Figure 1 is a schematic side view of a vehicle that may implement the method and system of the present disclosure,
Figures 2a and 2b show flowcharts describing two alternative example embodiments of the method and system,
Figures 3a - 3c describe the operation principles of an example embodiment of the method and system,
Figure 4 and 5 show example embodiments of the low fuel or low charge warning indicating device,
Figures 6a - 6d describe the operation principles of a further example embodiment of the method and system,
Figure 7 shows statistical popularity of various vehicle energy supply stations,
Figure 8 shows vehicles queuing at various vehicle energy supply stations,
Figure 9 shows vehicles queuing at various vehicle energy supply stations and additionally vehicles approaching said various vehicle energy supply stations,
Figures 10-13 show various alternative example embodiments or aspects of the method and system,
Figures 14-15 show various alternative example embodiments or aspects of the method and system,
and
Figure 16 and 17 show two example embodiments of the system according to the disclosure.

### DETAILED DESCRIPTION OF EXAMPLE EMBODIMENTS OF THE DISCLOSURE

The present disclosure will now be described more fully hereinafter with reference to the accompanying drawings, in which exemplary embodiments of the disclosure are shown. The disclosure may, however, be embodied in many different forms and should not be construed as limited to the embodiments set forth herein; rather, these embodiments are provided for thoroughness and completeness. Like reference characters refer to like elements throughout the description. The drawings are not necessarily to scale and certain features may be exaggerated in order to better illustrate and explain the exemplary embodiments of the present disclosure.

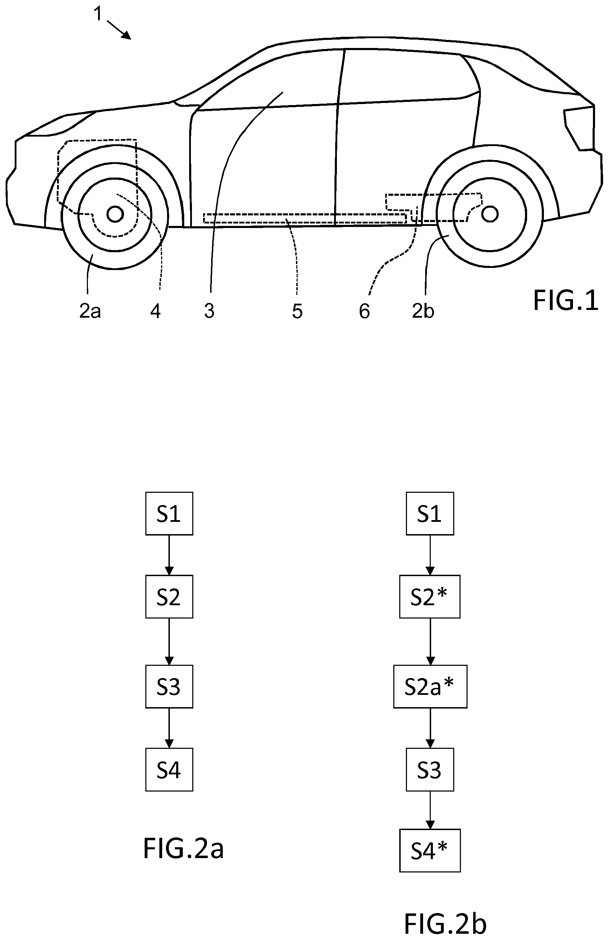

Referring now to figure 1, there is depicted a side-view of a vehicle 1, in particular a passenger car or automobile, having a front wheel 2a, a rear wheel 2b, and a passenger compartment 3. In the example embodiment showed in figure 1, the car has a hybrid electric powertrain 4 for front wheel drive, wherein the powertrain 4 comprises a combustion engine connected to a transmission and one or more electrical propulsion motors drivingly connected to the front wheels 2a. A high-voltage propulsion electrical storage system (ESS), such as a propulsion battery pack 5 for driving the one or more electrical motors may for example be provided integrated into the floor of the car, and a fuel tank 6 may be provided to store fuel. The disclosure may however alternatively be implemented in a conventional combustion powered vehicle having no electrical propulsion motors, or in a fully electrically propulsed vehicle having no combustion engine, or in other type of vehicles such as hydrogen propulsed vehicles.

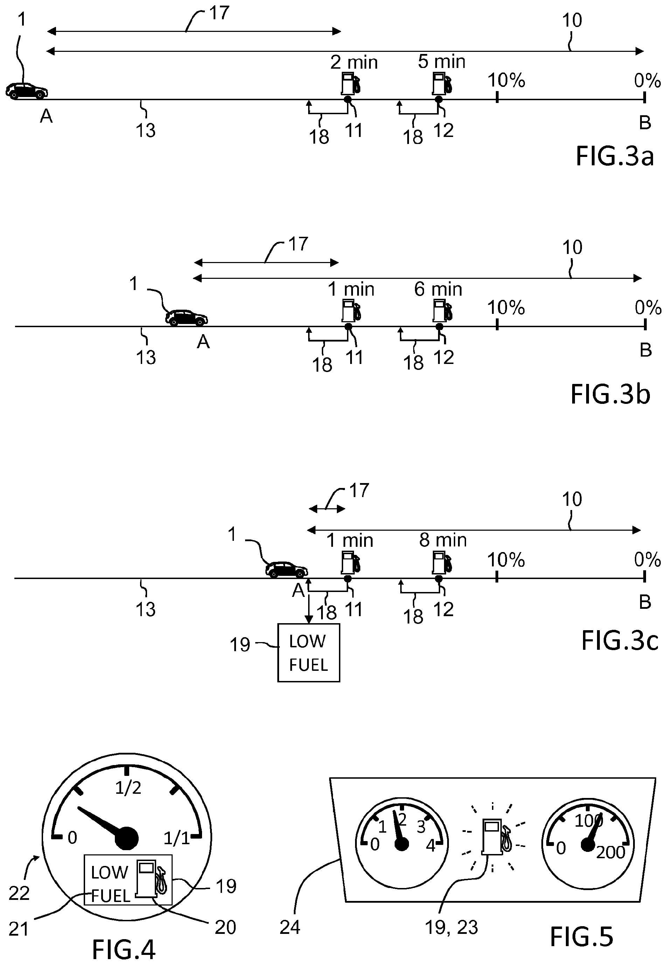

A first example embodiment of the method for controlling a low fuel or low charge warning system in a vehicle will hereinafter be described with reference to figures 2a and 3a to 3c. In particular, as shown in figure 2a, the method comprises a first step S1 of calculating an estimated driving range 10 of the vehicle 1, a second step S2 of identifying upcoming vehicle energy supply stations 11, 12 along a planned driving route 13 or in a traveling direction of the vehicle, and within estimated driving range 10 of the vehicle 1, a third step S3 of determining estimated waiting times for gaining access to a fuel pump or electrical charger for said upcoming vehicle energy supply stations 11, 12, and a fourth step S4 of controlling a low fuel or low charge warning trigger level of the low fuel or low charge warning system while taking into account the estimated waiting times.

In other words, the disclosure relates to method for determining and comparing the estimated waiting times for gaining access to a fuel pump or electrical charger at least two individual upcoming vehicle energy supply stations 11, 12 located along a planned driving route 13 or in a traveling direction of the vehicle and within estimated driving range 10 of the vehicle 1, and subsequently controlling a low fuel or low charge warning system in a vehicle based on this comparison, with the aim of providing the driver with a convenient, safe, cost-efficient and quick refuelling and charging of propulsion battery.

When implemented and in operation the method steps described above will typically be reiterated at a suitable repetition frequency, such as for example every minute, for providing more or less continuous updated and relevant waiting time estimates, and thus providing a well-founded control of the low fuel or low charge warning trigger level of the low fuel or low charge warning system.

For example, the first step S1 of calculating an estimated driving range 10 of the vehicle 1 may change slightly during the travel and typically requires regular updates. Similarly, the second step S2 of identifying upcoming vehicle energy supply stations 11, 12 along a planned driving route 13 or in a traveling direction of the vehicle, and within estimated driving range 10 of the vehicle 1, also requires regular updates, for example due to change of planned driving route or traveling direction of the vehicle, which would likely result in identification of a new set of upcoming vehicle energy supply stations.

Moreover, since the queuing situation at a fuel pump or electrical charger at an upcoming vehicle energy supply stations may sometimes quickly change, the step of determining estimated waiting times for gaining access to a fuel pump or electrical charger for said vehicle energy supply stations need frequent updates for providing reliable decision support for control of the low fuel or low charge warning trigger level.

The basic operation and working principals of method and system for controlling a low fuel or low charge warning trigger level of the low fuel or low charge warning system according to the disclosure will now be described with reference to figure 3a to 3c. In figure 3a, the vehicle 1 has maybe 40% fill level of the energy storage and two upcoming vehicle energy supply stations 11, 12 are identified along the planned driving route 13 and located within the estimated driving range 10 of the vehicle 1. The estimated waiting time is two minutes at a first energy supply station 11 and five minutes at a second energy supply station 12. However, the remaining driving distance 17 to the next energy supply station, i.e. the first energy supply station 11, is still long, for example about 100 km.

For obtaining the desired convenient, safe, cost-efficient and quick refuelling and charging of propulsion battery, the method involves controlling the low fuel or low charge warning trigger level for guiding the driver to select the vehicle energy supply station having shortest estimated waiting time.

This guidance of the driver may for example be accomplished by activating a low fuel or low charge warning indicating device at a certain distance ahead of arriving at the vehicle energy supply station having shortest estimated waiting time. Since the driver generally automatically tend to stop for refuelling or charging at the next available vehicle energy supply station upon detecting an activated low fuel or low charge warning indicating device, the desired implicit and low distractive guidance to the vehicle energy supply station having shortest estimated waiting time is accomplished.

The exact distance, hereinafter referred to a trigger distance, in kilometres ahead of the vehicle energy supply station having shortest estimated waiting time, at which the low fuel or low charge warning indicating device should be activated, may vary depending on the specific circumstances, such as vehicle speed, road type, whether conditions, etc.

Said distance, i.e. the trigger distance, may even be subject of a learning algorithm that registers the outcome of activation of the low fuel or low charge warning indicating device at the trigger distance ahead of arriving at the vehicle energy supply station having shortest estimated waiting time, and adjusts said trigger distance as a result of said outcome, for example by reducing or increasing said trigger distance if the driver was not successfully guided to the vehicle energy supply station having shortest estimated waiting time.

According to one example embodiment, said trigger distance may be in the range of 1 - 25 km, specifically in the range of 5 - 15 km.

In the example described with reference to figures 3a to 3c, said trigger distance 18 is set to 10 km. Hence, with about 100 km remaining driving distance 17 to the first energy supply station 11, corresponding to figure 3a, no activation of the low fuel or low charge warning indicating device is performed.

In figure 3b, the vehicle 1 has maybe 30% fill level of the energy storage and the estimated waiting time is now one minute at a first energy supply station 11 and six minutes at a second energy supply station 12. However, the remaining driving distance 17 to the first energy supply station 11, which for example here corresponds to about 50 km, is still larger than the trigger distance of 10 km, so no activation of the low fuel or low charge warning indicating device is performed.

In figure 3c, the estimated waiting time is now one minute at a first energy supply station 11 and eight minutes at a second energy supply station 12. In addition, the remaining driving distance 17 to the first energy supply station 11 is 10 km, i.e. corresponding to the trigger distance 18. Consequently, since the estimated waiting time is shorter at the first energy supply station 11 than the second energy supply station 12, the low fuel or low charge warning indicating device 19 becomes activated, despite that the vehicle 1 still has 25% fill level of the energy storage.

In other words, the low fuel or low charge warning trigger level of the low fuel or low charge warning system would be controlled and adjusted while taking into account the estimated waiting times.

With reference to figure 4, the low fuel or low charge warning indicating device 19 may according to one example embodiment comprise symbol 20 and/or text message 21 being displayed or illuminated on the vehicle dashboard, dashboard instrument panel, or integrated within a specific dashboard instrument, such as the fuel gauge 22. The symbol 20 and/or text message 21 is thus normally not displayed or illuminated and thereby not visible to the driver, but becomes displayed or illuminated and thus visible to the driver upon activation of the low fuel or low charge warning indicating device 19.

Figure 5 shows an alternative example embodiment where the low fuel or low charge warning indicating device 19 corresponds to a symbol 23 being displayed or illuminated on the dashboard instrument panel 24, which for example may include a tachometer and a speedometer.

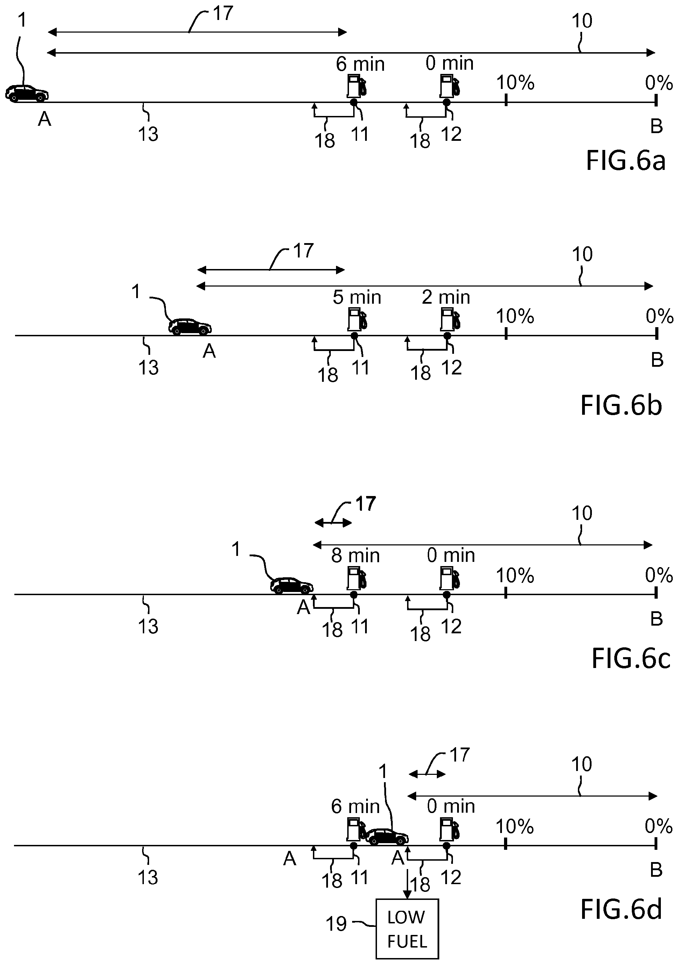

The basic operation and working principals of method and system for controlling a low fuel or low charge warning trigger level of the low fuel or low charge warning system according to the disclosure will now be further described with reference to figure 6a to 6d, which shows a similar scenario as that described with reference to figure 3a to 3c, but now with shorter waiting time at the second vehicle energy supply station 12.

Consequently, in figure 6a, the vehicle 1 has as before maybe 40% fill level of the energy storage and two upcoming vehicle energy supply stations 11, 12 are identified along the planned driving route 13 and located within the estimated driving range 10 of the vehicle 1. The estimated waiting time is six minutes at a first energy supply station 11 and zero minutes at a second energy supply station 12. However, the remaining driving distance 17 to the next energy supply station, i.e. the first energy supply station 11 is still long, for example about 100 km.

Similar to the example described with reference to figure 3a to 3c, trigger distance 18 is here also set to 10 km. Hence, with about 100 km remaining driving distance 17 to the first energy supply station 11, corresponding to figure 6a, no activation of the low fuel or low charge warning indicating device is performed.

In figure 6b, the vehicle 1 has maybe 30% fill level of the energy storage and the estimated waiting time is now five minutes at a first energy supply station 11 and two minutes at a second energy supply station 12. However, the remaining driving distance 17 to the first energy supply station 11, which for example here corresponds to about 50 km, is still larger than the trigger distance of 10 km, so no activation of the low fuel or low charge warning indicating device is performed.

In figure 6c, the estimated waiting time is now eight minutes at a first energy supply station 11 and zero minutes at a second energy supply station 12. In addition, the remaining driving distance 17 to the first energy supply station 11 is 10 km, i.e. within the trigger distance 18. However, since the estimated waiting time is longer at the first energy supply station 11 than the second energy supply station 12, the low fuel or low charge warning indicating device still not activated. The remaining distance 17 to the next energy supply station is hereby adjusted to correspond to the distance between the vehicle 1 and the second energy supply station 12.

In figure 6d, the estimated waiting time is now six minutes at a first energy supply station 11 and zero minutes at a second energy supply station 12. However, in this example embodiment there is only one energy supply station left and the comparison of estimated waiting times is therefore cancelled. Instead, when the remaining driving distance 17 to the second energy supply station 11 is 10 km, i.e. corresponding to the trigger distance 18, the low fuel or low charge warning indicating device 19 becomes activated, irrespective of estimated waiting times.

If there in the situation corresponding to figure 6d still had been at least two energy supply stations upcoming along the planned driving route 13 or in a traveling direction of the vehicle, and within estimated driving range 10 of the vehicle 1, then the fourth step S4 of controlling a low fuel or low charge warning trigger level of the low fuel or low charge warning system while taking into account the estimated waiting times would still be applicable, and the estimated waiting times for the two upcoming energy supply stations would have been compared for guiding the driver to the energy supply station having shortest waiting time.

According to one example embodiment, the method may additionally comprise controlling a navigation system of the vehicle for guiding the driver to the vehicle energy supply station having shortest estimated waiting time. In other words, not only would the low fuel or low charge warning trigger level of the low fuel or low charge warning system be controlled taking into account the estimated waiting times of the upcoming two energy supply stations, the navigation system would be controlled for guiding the driver to the vehicle energy supply station having shortest estimated waiting time.

This may for example be implemented by, after the low fuel or low charge warning indicating device 19 has become activated, displaying a question to the driver, or otherwise prompting the driver, whether the navigation system would provide navigation assistance to a vehicle energy supply station. Alternatively, the navigation system may automatically provide navigation assistance to the vehicle energy supply having the shortest estimated waiting time.

With reference again to figure 3a, the estimated driving range 10 of the vehicle corresponds to the estimated driving range from the present location (location A in figure 3a) to the end of the estimated driving range (location B in figure 3a), i.e. location where the energy storage is empty, thus corresponding to location where the fill level of the energy storage has reached 0%. The energy storage corresponds to the for example the fuel tank of a combustion engine powered vehicle, or the electrical storage system (ESS) of a fully electrical vehicle, or the like.

With reference again to figure 2a, the first step S1 of calculating the estimated driving range 10 of the vehicle may for example be performed by multiplying the amount of remaining fuel (litres) with the average fuel consumption [km/litre fuel] of the vehicle, or by multiplying a Wh (Watthour) rating of the battery with the average efficiency in km per Wh (kilometres per Wh) in a fully electrically propulsed vehicle.

The average fuel consumption or efficiency may then of course be calculated more in detail if higher accuracy is desired. For example, the type of road (country road, highway road, hilly or flat road, city driving) and/or traffic situation (free roads, traffic jam, rain, snow)) and/or ambient temperature, and/or engine temperature, and/or ESS temperature may be taken into account when calculation of the estimated driving range 10 of the vehicle.

The second step S2 of identifying upcoming vehicle energy supply stations 11, 12 along a planned driving route 13 or in a traveling direction of the vehicle, and within estimated driving range 10 of the vehicle 1, may for example be performed based on inputted navigation destination of the journey, the recommended (planned) driving route provided by the navigation system, and location data of vehicle energy supply stations along the recommended/planned driving route.

If no inputted navigation destination of the journey is provided, i.e. there is no planned driving route available, the second step S2 of identifying upcoming vehicle energy supply stations 11, 12 along a planned driving route 13 or in a traveling direction of the vehicle, and within estimated driving range 10 of the vehicle 1, may for example be performed based on received GPS-data indicating current location and direction of driving of the vehicle 1, map data indicating roads available at the location of the vehicle 1, such that the system may derive the current road and current driving direction, an estimated driving route ahead, and location data of vehicle energy supply stations 11, 12 along the current road and estimated driving route in a traveling direction of the vehicle 1. This approach for identifying upcoming vehicle energy supply stations 11, 12 is less accurate since the vehicle has less knowledge of the future driving route, and must make more assumptions, such as assuming that the vehicle continues driving in essentially the same main driving direction.

Alternatively, or in combination with above, the system may make a well-informed estimate of the planned driving route based on historical driving events occurring at certain days and/or times, such as repeated commuting to the work or home at certain days and at certain times.

Common for all described methods for identifying upcoming vehicle energy supply stations may, according to some example embodiments, be that only vehicle energy supply stations 11, 12 located directly along the planned or estimated driving route 13, e.g. less than 2 km offset from the planned or estimated driving route 13, are taken into account.

With reference again to figure 2a, the third step S3 of determining estimated waiting times for gaining access to a fuel pump or electrical charger for said upcoming vehicle energy supply stations 11, 12 may for example be determined based on historical data indicative of waiting time for gaining access to a fuel pump or electrical charger. Historical data of this kind is typically connected to a specific time of specific date or weekday or holiday, such as for example 12:00 a 'clock on 24 December. Such historical data may for example be stored on a remote server that may be accessed via wireless communication by the low fuel or low charge warning system of the vehicle.

The historical data indicative of waiting time for gaining access to a fuel pump or electrical charger may for example correspond to data collected by a user's mobile phone that registers by accelerometers the user sitting passively while being located at GPS location corresponding to a vehicle energy supply station, i.e. indicating that the user is passively waiting in the car for gaining access to a fuel pump or electrical charger. Alternatively, the vehicle itself may collect data indicative of waiting time for gaining access to a fuel pump or electrical charger by registering vehicle occupancy while the vehicle is located at GPS location corresponding to a vehicle energy supply station, i.e. indicating that the user is passively waiting within the car for gaining access to a fuel pump or electrical charger. Still more alternatively, the vehicle itself may collect data indicative of waiting time for gaining access to a fuel pump or electrical charger by registering vehicle standstill period while being located at GPS location corresponding to a vehicle energy supply station, and registering a subsequent refuelling or charging event, i.e. indicating that the user has been waiting for gaining access to a fuel pump or electrical charger. Waiting data associated with various vehicle energy supply stations collected by individual mobile phones or vehicles may be provided with a time and date stamp and uploaded to a remote server and subsequently made available to other vehicles.

The historical data indicative of waiting time for gaining access to a fuel pump or electrical charger may according to another example embodiment be historical number of financial transactions related to payments of fuel or electrical charging at a specific vehicle energy supply station. Financial transaction data may not give information about the actual waiting time but may provide an indication whether there is a queue at all at the vehicle energy supply station.

The historical data indicative of waiting time for gaining access to a fuel pump or electrical charger may according to another example embodiment be historical utilisation of the fuel pump or electrical charger.

Financial transaction data or utilisation data associated with various vehicle energy supply stations may be provided with a time and date stamp and uploaded to a remote server, which may derive corresponding estimated waiting times, and subsequently made available to other vehicles.

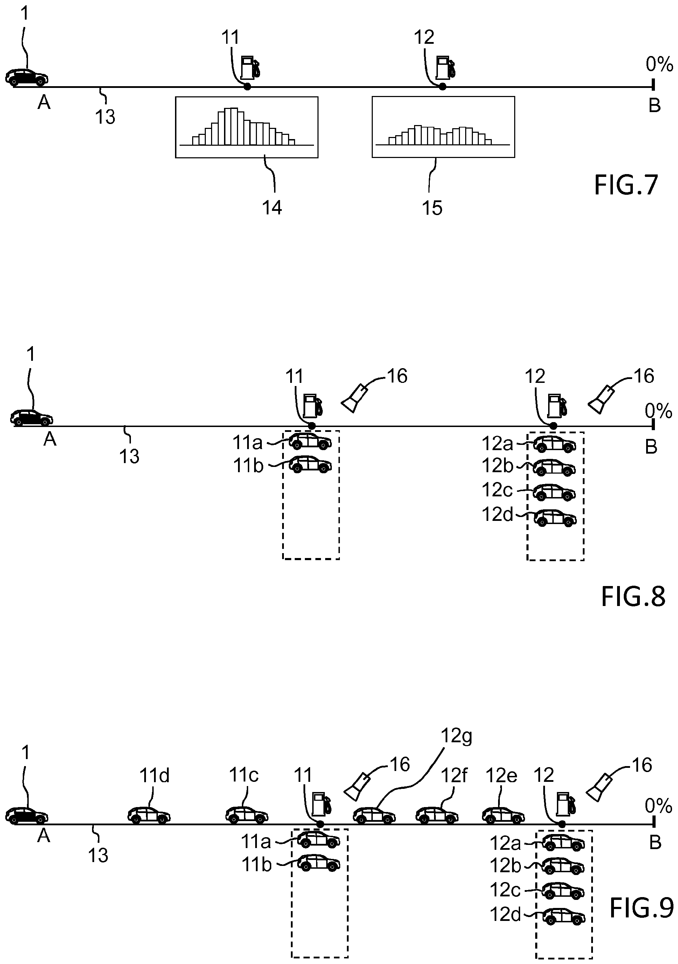

With reference to figure 7, the historical data indicative of waiting time for gaining access to a fuel pump or electrical charger may according to another example embodiment be historical popularity of the vehicle energy supply station. Historical popularity is easily registered and collected by for example mobile phones of users detecting visits of the user at a certain location, such as a vehicle energy supply station. In figure 7, the historical popularity is illustrated as time chart 14, 15 with time along a horizontal axis and popularity, i.e. number of visitors, along the vertical axis, and the low fuel or low charge warning system may then derive a waiting time for gaining access to a fuel pump or electrical charger based on said popularity.

The historical data indicative of waiting time for gaining access to a fuel pump or electrical charger may according to another example embodiment be historical number of vehicles located at vehicle energy supply station. This information may for example be obtained by means of a surveillance camera monitoring an area associated with the fuel pumps or electrical chargers of a vehicle energy supply station. The surveillance camera is suitable configured to exclude vehicles stopping at the vehicle energy supply station for reasons other than refuelling or charging, such as visiting a restaurant or shop. Surveillance data associated with various vehicle energy supply stations may be used for deriving corresponding estimated waiting times, which may be stored on a remote server and made available to other vehicles.

With reference to figure 8, estimated waiting times for gaining access to a fuel pump or electrical charger for said vehicle energy supply stations may according to still another example embodiment be determined based on actual number of other vehicles located at the vehicle energy supply stations. In figure 8, a first energy supply station 11 has two other vehicles located at the vehicle energy supply station 11: a first vehicle 11a currently occupying a fuel pump or electrical charger and a second vehicle 11b waiting for gaining access to a fuel pump or electrical charger; and a second energy supply station 12 having four other vehicles located at the vehicle energy supply station 12: a first vehicle 12a currently occupying a fuel pump or electrical charger and second to fourth vehicles 12b, 12c, 12d waiting for gaining access to a fuel pump or electrical charger.

Hence, estimated waiting times for gaining access to a fuel pump or electrical charger for said vehicle energy supply stations may alternatively also be based on actual number of other vehicles 11a-11b, 12a-12d located at the vehicle energy supply stations 11, 12, as well as the number of said other vehicles 11a,12a that are currently occupying a fuel pump or electrical charger and the number of said other vehicles 11b, 12b-12d that are currently waiting for gaining access to a fuel pump or electrical charger.

Based on this information a relatively accurate estimate of the waiting times for gaining access to a fuel pump or electrical charger may be determined for each of the first and second energy supply station 11, 12. As describe above, actual number of other vehicles located at the vehicle energy supply stations may for example be obtained by means of a surveillance camera 16 monitoring an area associated with the fuel pumps or electrical chargers of a vehicle energy supply station. By monitoring the actual number of other vehicles located at the vehicle energy supply stations and not the historical number of vehicles located at vehicle energy supply station, a more accurate and relevant estimation of waiting times for gaining access to a fuel pump or electrical charger may be obtained.

Furthermore, said estimate of the waiting times for gaining access to a fuel pump or electrical charger of the first and second energy supply stations 11, 12 may be further complemented with information about current charging level of currently charged other vehicle 11a, 12a, such that an estimate of how long further the currently charged other vehicle 11a, 12a likely will be occupying an electrical charger. This may be implemented by establishing a communication channel between the currently charged other vehicle 11a, 12a and charging station.

Moreover, said estimate of the waiting times for gaining access to a fuel pump or electrical charger of the first and second energy supply stations 11, 12 may be even further complemented with information about current charging level of also the other vehicles 11b, 12b, 12c, 12d that are currently queuing for getting access to the electrical charger, as well as estimated charging power, such that a reasonable estimate of the charging time of the waiting vehicles 11b, 12c-12d may be determined. This may be implemented by establishing a communication channel between the waiting other vehicles 11b, 12b, 12c, 12d and charging station.

With reference to figure 9, the method may according to a further example embodiment include that the estimated waiting times for gaining access to a fuel pump or electrical charger 11, 12 for said vehicle energy supply stations are determined based also on the number of other vehicles 11c, 11d, 12e, 12f, 12g that are currently driving but expected to stop at the vehicle energy supply stations before estimated arrival time of own vehicle at said vehicle energy supply stations.

This may for example be implemented by uploading from said currently driving other vehicles 11c, 11d, 12e, 12f, 12g information about expected stops at a specific vehicle energy supply station to a remote server, and subsequently making this information available to other vehicles. Said information of expected stops of said currently driving other vehicles 11c, 11d, 12e, 12f, 12g at said energy supply stations may for example be based on actual and/or planned activation of the low fuel or low charge warning indicating device 19.

In other words, taking the situation described with reference to figure 8 and additionally providing two currently driving other vehicles 11c, 11d that are likely going to stop at the first energy supply station 11, if the drivers of said currently driving other vehicles 11c, 11d decide to follow the guidance provided by the activation of the low fuel or low charge warning indicating device 19, and additionally providing three currently driving other vehicles 12e, 12f, 12g that are likely going to stop at the second energy supply station 12, if the drivers of said currently driving other vehicles 12e, 12f, 12g decide to follow the guidance provided by the activation of the low fuel or low charge warning indicating device 19. Thereby, the estimated waiting times are more accurate and reliable because also the estimated behaviour of currently driving other vehicles 11c, 11d, 12e, 12f, 12g in front of the own vehicle are taken into account.

Again with reference to figure 9, the method may according to a further example embodiment further include that estimated waiting times for gaining access to a fuel pump or electrical charger for said vehicle energy supply stations 11, 12 are determined based also on expected time point of arrival at the vehicle energy supply stations 11, 12 of said currently driving other vehicles 11c, 11d, 12e, 12f, 12g that are expected to stop at the vehicle energy supply stations 11, 12 before estimated arrival time of own vehicle 1 at said vehicle energy supply stations 11, 12. Thereby, the estimated waiting times are even more accurate and reliable because not only is estimated stop of said currently driving other vehicles 11c, 11d, 12e, 12f, 12g in front of the own vehicle at various vehicle energy supply stations 11, 12 taken into account, but also the estimated driving times of said currently driving other vehicles 11c, 11d, 12e, 12f, 12g in front of the own vehicle for arriving at said various vehicle energy supply stations 11, 12.

This may for example be implemented by uploading from the currently driving other vehicles 11c, 11d, 12e, 12f, 12g expected vehicle arrival time at a specific vehicle energy supply station to a remote server, and subsequently making this information available to other vehicles.

Clearly, one or more different embodiments for estimated waiting times for gaining access to a fuel pump or electrical charger for said vehicle energy supply stations described above may be combined to increase the accuracy of the estimation.

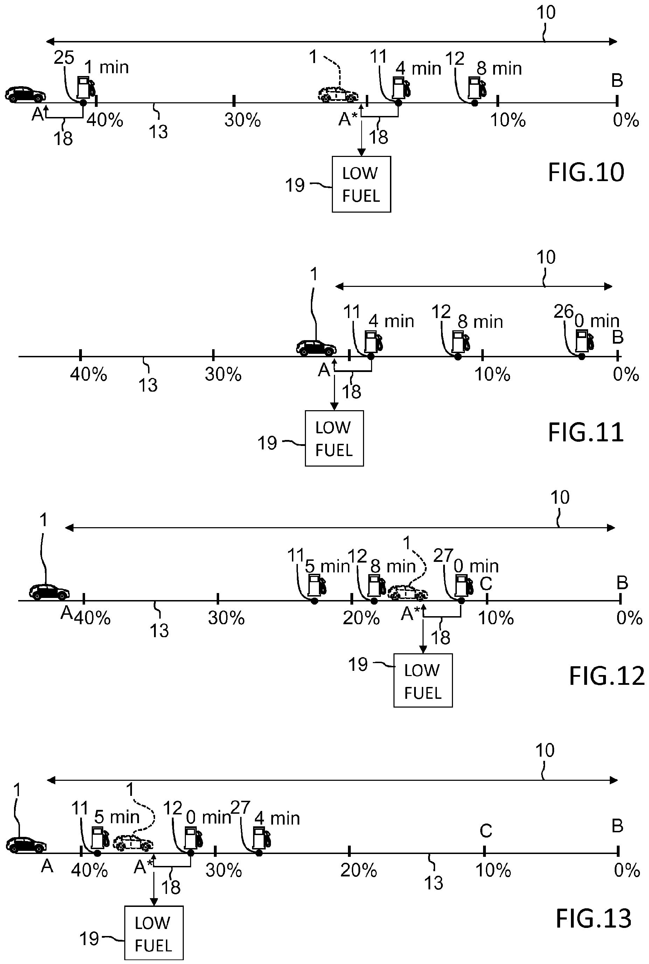

With reference to figure 10, according to one example embodiment of the disclosure, the step of determining estimated waiting times for gaining access to a fuel pump or electrical charger may be performed taking into account only those upcoming vehicle energy supply stations that are located at a position associated with less than 40%, specifically less than 30%, remaining fuel content or ESS charge level, or located at a position less than 160 km, specifically less than 120 km, before the end B of estimated driving range of the vehicle. The practical result of this control strategy is that activation of the low fuel or low charge warning indicating device 19 will not occur when the vehicle has for example 50% remaining fuel content or ESS charge level, even if passing by a vehicle energy supply station with zero estimated waiting time. The underlying reason for blocking activation of the low fuel or low charge warning indicating device 19 at such a scenario may be the driver's unacceptance and distrust associated with activation of the low fuel or low charge warning indicating device 19 as such a high fill/charge level.

Such a scenario is schematically illustrated in figure 10, which shows that the low fuel or low charge warning indicating device 19 is not activated when the vehicle is in position A, despite that the estimated waiting time at the next upcoming vehicle energy supply station 25 is only 1 minute while the estimated waiting times at the thereafter following vehicle energy supply stations 11, 12 are four and 8 minutes, merely because the next upcoming vehicle energy supply station 25 is not located at a position associated with less than 40% remaining fuel content or ESS charge level before the end B of estimated driving range 10 of the vehicle 1. Instead, the low fuel or low charge warning indicating device 19 is then activated when the vehicle is in position A* assuming that the estimated waiting times at the thereafter following vehicle energy supply stations 11, 12 remain the same when travelling from location A to location A*.

Similarly, with reference to figure 11, according to one example embodiment of the disclosure, the step of determining estimated waiting times for gaining access to a fuel pump or electrical charger may be performed only for those upcoming vehicle energy supply stations that are located at a position associated with at least 5%, specifically at least 10%, remaining fuel content or electrical storage system (ESS) charge level, or located at a position at least 20 km, specifically at least 40 km, before the end B of the estimated driving range of the vehicle.

The practical result of this control strategy is that activation of the low fuel or low charge warning indicating device 19, as illustrated in figure 11, will become activated when the vehicle 1 is located at the trigger distance 18 prior to arriving at the first while passing the first vehicle energy supply station 11, which at this time point has an estimated waiting time of four minutes, despite that the second vehicle energy supply station 12 has an estimated waiting time of eight minutes and a third further in front located vehicle energy supply station 26 has an estimated waiting time of zero minutes, merely because the third vehicle energy supply station 26 is located at a position associated with less than 5% remaining fuel content or electrical storage system (ESS) charge level and is therefore not taken into account when identifying upcoming vehicle energy supply stations along the planned driving route 13 or in a traveling direction of the vehicle. The underlying reason for not taking the third vehicle energy supply station 26 located at a position associated with less than 5% remaining fuel content or electrical storage system (ESS) charge level into account when identifying upcoming vehicle energy supply station may for example be avoiding the risk for running out of fuel or having a depleted ESS before arriving said third vehicle energy supply station 26 due to inaccuracies in terms of calculating the estimated driving range 10 of the vehicle 1, as well as the driver's potential concern associated with activation of the low fuel or low charge warning indicating device 19 as such a low fill/charge level.

However, both figure 12 and figure 13 shows other example scenarios including three vehicle energy supply stations that all have been taken into account because they are located within a range of 5 - 40% remaining fuel content or electrical storage system (ESS) charge level.

Specifically, in the example scenario schematically illustrated in figure 12, when the vehicle 1 located at location A, a first, second and third upcoming vehicle energy supply stations 11, 12, 27 located along a planned driving route 13 or in a traveling direction of the vehicle, and within estimated driving range 10 of the vehicle 1, are identified when driving. Each of said upcoming vehicle energy supply stations 11, 12, 27 are taken into account when calculating estimated waiting times for gaining access to a fuel pump or electrical charger for said first, second and third upcoming vehicle energy supply stations 11, 12, 27, which estimated waiting times are for example five, eight and zero minutes, respectively. As a result of comparing said estimated waiting times, the low fuel or low charge warning indicating device 19 will become activated at a trigger distance in front of the third upcoming vehicle energy supply station 27, i.e. at location A* in figure 12, assuming that the estimated waiting times remain the same when travelling from location A to location A*.

Similarly, in the example scenario schematically illustrated in figure 13, when the vehicle 1 located at location A, a first, second and third upcoming vehicle energy supply stations 11, 12, 27 located along a planned driving route 13 or in a traveling direction of the vehicle, and within estimated driving range 10 of the vehicle 1, are identified. Each of said upcoming vehicle energy supply stations 11, 12, 27 are taken into account when calculating estimated waiting times for gaining access to a fuel pump or electrical charger for said first, second and third upcoming vehicle energy supply stations 11, 12, 27, which estimated waiting times are for example five, zero and four minutes, respectively. As a result of comparing said estimated waiting times, the low fuel or low charge warning indicating device 19 will become activated at a trigger distance in front of the second upcoming vehicle energy supply station 12, i.e. at location A* in figure 12, assuming that the estimated waiting times remain the same when travelling from location A to location A*.

According to a further example embodiment of the disclosure, also with reference to figure 12 and 13, the method for controlling a low fuel or low charge warning system in a vehicle may be configured such that, when at least three upcoming vehicle energy supply stations 11, 12, 27 are identified along a planned driving route 13 or in a traveling direction of the vehicle, which vehicle energy supply stations are all located within the estimated driving range 10 of the vehicle and at a position associated with at least 10% remaining fuel content or ESS charge level or located at a position at least 40 km before end of estimated driving range of the vehicle 1, determining estimated waiting times for gaining access to a fuel pump or electrical charger only for the two upcoming vehicle energy supply stations 12, 27 that are located closest to a position C associated with 10% remaining fuel content or ESS charge level, while both said two upcoming vehicle energy supply stations 12, 27 are located at a position associated with at least 10% remaining fuel content or ESS charge level.

The practical result of this control strategy is that the first upcoming vehicle energy supply station 11 is not taken into account when comparing estimated waiting times because it is deemed sufficient to compare estimated waiting times of two upcoming vehicle energy supply station 12, 27. Moreover, thereby an activation of the low fuel or low charge warning indicating device 19 at the trigger distance 18 prior to arriving at the first vehicle energy supply station 11 is avoided, even if the estimated waiting time is shortest at this station 11, because activation at such an early stage with at least two stations 12, 27 still ahead and within the operating range of the vehicle 1, such that a driver's potential unacceptance and distrust associated with activation of the low fuel or low charge warning indicating device 19 as such an early stage may be avoided.

According to an alternative example, the method for controlling a low fuel or low charge warning system in a vehicle may be configured for determining estimated waiting times for gaining access to a fuel pump or electrical charger only for the three upcoming vehicle energy supply stations 11, 12, 27 that are located closest to a position C associated with 10% remaining fuel content or ESS charge level, while all of said three upcoming vehicle energy supply stations 11, 12, 27 are located at a position associated with at least 10% remaining fuel content or ESS charge level. This control method may result in a suitable restriction in scenarios with four or more upcoming stations being identified along the planned driving route 13 and with the driving range of the vehicle 1.

According to still a further example embodiment of the disclosure described with reference to figure 2b, 14 and 15, the method for controlling a low fuel or low charge warning system in a vehicle may comprises a first step S1 of calculating an estimated driving range 10 of the vehicle 1, a second step S2* of identifying upcoming vehicle energy supply stations 11, 12 along a planned driving route of the vehicle involves including vehicle energy supply stations 11 that are located displaced from the planned driving route 13 of the vehicle and requires up to 100 km, specifically up to 60 km, and more specifically up to 20 km, extra travel distance 28 for passing by, while still being within estimated driving range 10 of the vehicle 1, a third step S2a* of determining estimated extra travel time for passing by said upcoming vehicle energy supply stations 11 that are located displaced from the planned driving route 13, a fourth step S3 of determining estimated waiting times for gaining access to a fuel pump or electrical charger for said upcoming vehicle energy supply stations 11, 12, and a fourth step S4* of controlling the low fuel or low charge warning trigger level of the low fuel or low charge warning system taking into account also the extra travel time 30 for passing by said upcoming vehicle energy supply stations 11, for guiding the driver to select the vehicle energy supply station having shortest combined estimated waiting time and estimated extra travel time.

Estimated extra travel time for passing by said upcoming vehicle energy supply stations 11 that are located displaced from the planned driving route 13 may for example be provided by the navigation system, online route planners, or be calculated by simply dividing extra driving distance 28 derived from map data by a certain vehicle speed, which may be predetermined or based in speed limits for the road passing by said upcoming vehicle energy supply stations 11.

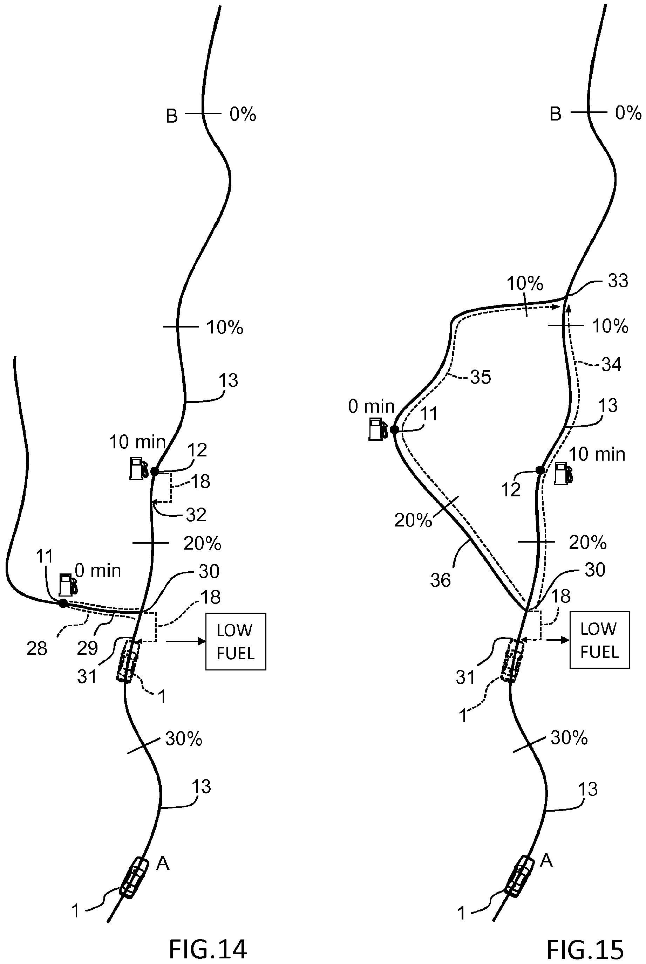

A first example scenario showing the working principles of this example embodiment of the method is described with reference to figure 14, which schematically shows the vehicle located at location A and driving along a main road section corresponding to the planned driving route 13. An estimated driving range of the vehicle 1 is calculated and results in an estimated end of the driving range at location B.

Upcoming vehicle energy supply stations along the planned driving route 13 of the vehicle are then identified, including vehicle energy supply stations 11 that are located displaced from the planned driving route 13 of the vehicle and requires for example up to 20 km extra travel distance 28 for passing by, while still being within estimated driving range 10 of the vehicle 1. In the present example, a first vehicle energy supply station 11 located displaced from the planned driving route 13 and requires a total of 6 km extra travel distance 28 for passing by, i.e. two times 3 km because the driver must go back to the planned driving route along the same road section 29. In addition, a second vehicle energy supply station 12 located along the planned driving route is identified.

A suitable location for activating the low fuel or low charge warning indicating device 19 in case the first vehicle energy supply station 11 is deemed having shortest combined estimated waiting time and estimated extra travel time may in this specific example be calculated as location 31 based on the location of the road junction 30 leading to the first vehicle energy supply station 11 in combination with the trigger distance 18. A suitable location for activating the low fuel or low charge warning indicating device 19 in case the second vehicle energy supply station 12 is deemed having shortest combined estimated waiting time and estimated extra travel time may in this specific example be calculated as location 32 based on the location of the second vehicle energy supply station 12 in combination with the trigger distance 18.

The estimated extra travel time for passing by the first vehicle energy supply station 11 may be calculated to 5 minutes. However, since the vehicle is still at location A, i.e. ahead of the said locations 31, 32 for activating the low fuel or low charge warning indicating device 19, no activation is made.

When the vehicle arrives at location 31, the estimated waiting times for gaining access to a fuel pump or electrical charger for said first and second upcoming vehicle energy supply stations 11, 12 are determined and compared. The first vehicle energy supply station is deemed having an estimated waiting time of zero minutes and an estimated extra travel time of 5 minutes, thus resulting in a combined estimated waiting time and estimated extra travel time of 5 minutes. The second vehicle energy supply station 12 is deemed having an estimated waiting time of 10 minutes and no extra travel time because it is located along the planned route 13.

Consequently, the low fuel or low charge warning trigger level of the low fuel or low charge warning system is controlled to activate the low fuel or low charge warning indicating device 19 when the vehicle is at location 31, thereby informing the driver that refuelling or recharging in the near future may be advisable. This control method may to some extent be beneficial without navigation assistance, but is particularly beneficial in combination with navigation assistance due to the displaced location of the a first vehicle energy supply station 11 relative to the planned driving route 13, making it more difficult to identify for the driver.

A second example scenario showing the working principles of this example embodiment of the method is briefly described with reference to figure 15, wherein only the difference with respect to the example of figure 14 will be described. In this example, the first vehicle energy supply station 11 is located displaced from the planned driving route 13 but the driver may arrive back at the planned driving route 13 at a second junction 33. The total extra travel distance for passing by the first vehicle energy supply station 11 is thus calculated by subtracting the driving distance 34 between the first junction 30 and second junction 33 while driving on the planned route 13 from the driving distance 35 between the first junction 30 and second junction 33 while driving on the extra route 36 that passes by first vehicle energy supply station 11. In this specific example, the total extra travel distance for passing by the first vehicle energy supply station 11 is calculated to for example 9 km.

Based on said total extra travel distance for passing by the first vehicle energy supply station 11, the estimated extra travel time for passing by the first vehicle energy supply station 11 may be calculated to 8 minutes.

When the vehicle arrives at location 31, the estimated waiting times for gaining access to a fuel pump or electrical charger for said first and second upcoming vehicle energy supply stations 11, 12 are determined and compared. The first vehicle energy supply station 11 is deemed having an estimated waiting time of zero minutes and an estimated extra travel time of 8 minutes, thus resulting in a combined estimated waiting time and estimated extra travel time of 8 minutes. The second vehicle energy supply station 12 is deemed having an estimated waiting time of 10 minutes and no extra travel time because it is located along the planned route 13.

Consequently, the low fuel or low charge warning trigger level of the low fuel or low charge warning system is controlled to activate the low fuel or low charge warning indicating device 19 when the vehicle is at location 31, thereby informing the driver that refuelling or recharging in the near future may be advisable.

The specific extra travel distance limit applied for determining whether an adjacent vehicle energy supply station should be identified as an upcoming vehicle energy supply station may be selected in accordance with the specific circumstances of each implementation. For example, fuel refill of a combustion powered vehicle is typically performed relatively quickly, thereby indicating that waiting time at the vehicle energy supply station typically is relatively short, even at popular occasions. In such an implementation, a relatively short extra travel distance limit may thus be appropriate, such as for example about up to 40 km, or up to 20 km. On the other hand, battery charging a pure battery electric vehicle is typically performed relatively slowly, thereby indicating that waiting time at the station often may be relatively long. In such an implementation, a relatively long extra travel distance limit may thus be appropriate, such as for example about up to 100 km, or up to 60 km.

The method for controlling the low fuel or low charge warning system in a vehicle as described above may additionally be provided with a conventional fixed low fuel or low charge warning trigger level, such as for example at 10%, 15% or 20% remaining fuel or charge level. The low fuel or low charge warning indicating device 19 may then be controlled to become activated at said trigger level when for example no upcoming vehicle energy supply stations 11, 12, 25, 26, 27 are identified along the planned driving route 13 or in the traveling direction of the vehicle 1, and within estimated driving range 10 of the vehicle 1. Alternatively, the low fuel or low charge warning indicating device 19 may be controlled to become activated at said trigger level independent of whether any upcoming vehicle energy supply stations 11, 12, 25, 26, 27 are identified along the planned driving route 13 or in the traveling direction of the vehicle 1, and within estimated driving range 10 of the vehicle 1.

According to yet a further example embodiment that is specifically relevant for plug-in electric vehicles, i.e. vehicles that may be plugged into an electrical grid for charging of the vehicle electrical storage system (ESS) 5 while parking, the inputted navigation destination of the journey may be deemed including a vehicle energy supply station 11, 12, 25-27 having zero waiting time for gaining access to an electrical charging station. For example, when the inputted navigation destination of the journey somehow is deemed corresponding to a vehicle home destination the low charge warning system 40 may automatically conclude that the inputted navigation destination of the journey includes a vehicle energy supply station 11, 12, 25-27 having zero waiting time. Alternatively, or in addition to above, the low charge warning system 40 may receive information, for example from the driver, that the inputted navigation destination of the journey includes a vehicle energy supply station 11, 12, 25-27 having zero waiting time. The low charge warning system 40 for a vehicle comprising a low charge warning indicating device 19 will then behave as described above with reference to figures 1-15, but additionally identifying an upcoming vehicle energy supply station 11, 12, 25, 26, 27 having zero waiting time for gaining access to an electrical charging station at the inputted navigation destination of the journey.

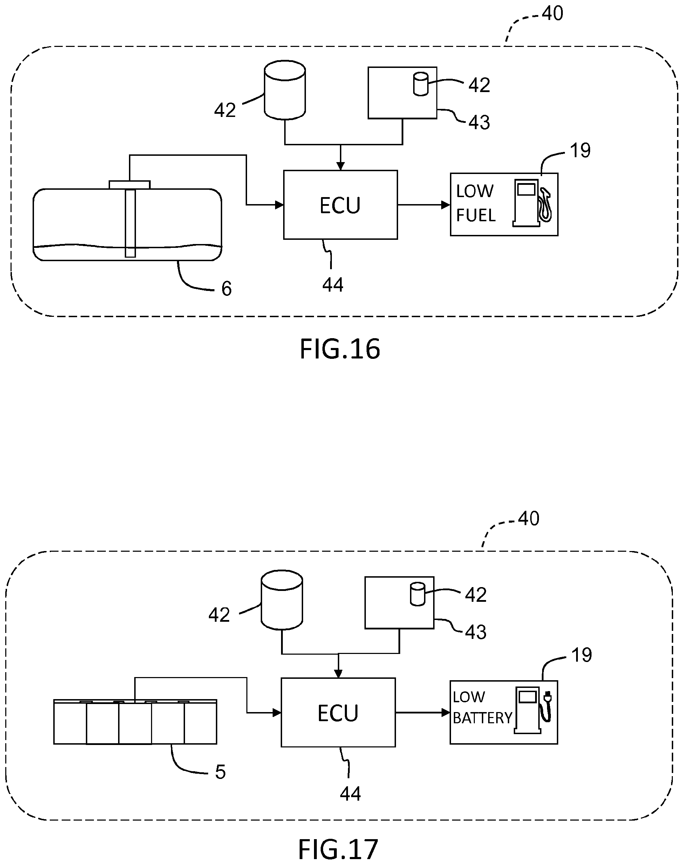

Example embodiments of low fuel or low charge warning systems 40 for a vehicle suitable for implementing the method according to the disclosure are schematically illustrated in figure 16 and 17, respectively.

Specifically, figure 16 shows an example embodiment of a low fuel warning system 40 for a vehicle comprising a low fuel warning indicating device 19, a vehicle fuel tank 6, one or more computer data storage devices 42 including geographical position information of vehicle energy supply stations and information indicative of waiting times for gaining access to fuel pumps at said vehicle energy supply stations, a vehicle geographical position detection device 43, and an electronic controller 44.

The electronic controller 44 is configured for acquiring information about remaining fuel content of the vehicle fuel tank and subsequently calculating an estimated driving range of the vehicle, acquiring geographical positioning information from the vehicle geographical position detection device and monitoring vehicle geographical position and driving direction, acquiring geographical position information of vehicle energy supply stations from the one or more computer data storage devices and identifying upcoming vehicle energy supply stations along a planned driving route or in a traveling direction of the vehicle and within estimated driving range of the vehicle, acquiring information indicative of waiting times for gaining access to fuel pumps at said upcoming vehicle energy supply stations from said one or more computer data storage devices and determining estimated waiting times for gaining access to a fuel pump for said upcoming vehicle energy supply stations, and controlling a trigger level of the low fuel warning indicating device while taking into account the estimated waiting times.

The computer data storage devices 42 may for example include a remote server having stored and updated information indicative of waiting times for gaining access to fuel pumps at said vehicle energy supply stations. Furthermore, geographical position information of vehicle energy supply stations may for example be stored on a data storage device 42 integrated in the vehicle geographical position detection device 43, or on a remote server. The vehicle geographical position detection device 43 may for example corresponds to a conventional GPS-based navigation system.

Moreover, the system is schematically described as including a single ECU merely for providing a simplified disclosure of the innovative concept, and the skilled person is well-aware that the method and system may alternatively be implemented be a plurality of interconnected ECU:s, each having more specialised tasks, such as detecting remaining fuel level or ESS charge level, providing vehicle position data, navigation support, etc.

Figure 17 shows an example embodiment of a low charge warning system 40 for a vehicle comprising low charge warning indicating device 19, a vehicle electrical storage system (ESS) 5, one or more computer data storage devices 42 including geographical position information of vehicle energy supply stations and information indicative of waiting times for gaining access to electrical chargers at said vehicle energy supply stations, a vehicle geographical position detection device 43, and an electronic controller.

The electronic controller is configured for acquiring information about remaining vehicle ESS charge level and subsequently calculating an estimated driving range of the vehicle, acquiring geographical positioning information from the vehicle geographical position detection device and monitoring vehicle geographical position and driving direction, acquiring geographical position information of vehicle energy supply stations from the one or more computer data storage devices and identifying upcoming vehicle energy supply stations along a planned driving route or in a traveling direction of the vehicle and within estimated driving range of the vehicle, acquiring information indicative of waiting times for gaining access to electrical chargers at said upcoming vehicle energy supply stations from said one or more computer data storage devices and determining estimated waiting times for gaining access to an electrical charger for said upcoming vehicle energy supply stations, and controlling a trigger level of the low charge warning indicating device while taking into account the estimated waiting times.

Although the disclosure has been described in relation to specific combinations of method steps or components, it should be readily appreciated that said method steps or components may be combined in other configurations as well which is clear for the skilled person when studying the present application. Thus, the above description of the example embodiments of the present disclosure and the accompanying drawings are to be regarded as a non-limiting example of the disclosure and the scope of protection is defined by the appended claims. Any reference sign in the claims should not be construed as limiting the scope.

Although discussed above as methods described by the flowcharts of Figures 2a and 2b, it should be appreciated that one or more operations may be combined into a single operation, or that a single operation may be divided into two separate operations, that the order of operations sometimes may be changed, and that additional operations may be inserted into the disclosed flowcharts. For example, the step of acquiring information about remaining fuel content of the vehicle fuel tank 6 or vehicle electrical storage system charge level may be performed before or after the step of acquiring geographical positioning information from the vehicle geographical position detection device. Moreover, the step of acquiring geographical position information of vehicle energy supply stations 11, 12, 25, 26, 27 from the one or more computer data storage devices 42 may be performed before or after one or both of the steps of acquiring information about remaining fuel content of the vehicle fuel tank 6 or vehicle electrical storage system charge level and the step of acquiring geographical positioning information from the vehicle geographical position detection device. Hence, the methods discussed are merely example embodiments of the present disclosure as contemplated.

## Claims

1. Method for controlling a low fuel or low charge warning system in a vehicle (1), the method comprising:
calculating an estimated driving range (10) of the vehicle (1),
identifying upcoming vehicle energy supply stations (11, 12, 25, 26, 27) along a planned driving route (13) or in a traveling direction of the vehicle (1), and within estimated driving range (10) of the vehicle (1),
determining estimated waiting times for gaining access to a fuel pump or electrical charger for said upcoming vehicle energy supply stations (11, 12, 25, 26, 27), and
controlling a low fuel or low charge warning trigger level of the low fuel or low charge warning system while taking into account the estimated waiting times.

2. Method according to claim 1, comprising controlling the low fuel or low charge warning trigger level for guiding the driver to select the vehicle energy supply station (11, 12, 25, 26, 27) having shortest estimated waiting time.

3. Method according to claim 2, comprising controlling the low fuel or low charge warning trigger level for guiding the driver to select the vehicle energy supply station (11, 12, 25, 26, 27) having shortest estimated waiting time by activating low fuel or low charge warning indicating device (19) at a certain distance (18) ahead of arriving at the vehicle energy supply station (11, 12, 25, 26, 27) having shortest estimated waiting time.

4. Method according to claim 2 or claim 3, comprising controlling a navigation system of the vehicle (1) for guiding the driver to the vehicle energy supply station (11, 12, 25, 26, 27) having shortest estimated waiting time.

5. Method according to any of the preceding claims, wherein estimated waiting times for gaining access to a fuel pump or electrical charger for said vehicle energy supply stations (11, 12, 25, 26, 27) is determined based on historical data indicative of waiting time for gaining access to a fuel pump or electrical charger.

6. Method according to claim 5, wherein said historical data is any of the following:
- historical waiting time for gaining access to a fuel pump or electrical charger,
- historical popularity of the vehicle energy supply station (11, 12, 25, 26, 27),
- historical number of financial transactions related to payments of fuel or electrical charging,
- historical number of vehicles located at vehicle energy supply station (11, 12, 25, 26, 27),
- historical utilisation of the fuel pump or electrical charger.

7. Method according to any of the preceding claims, wherein estimated waiting times for gaining access to a fuel pump or electrical charger for said vehicle energy supply stations (11, 12, 25, 26, 27) is determined based on actual number of other vehicles (11a-11b, 12a-12d) located at the vehicle energy supply stations (11, 12, 25, 26, 27).

8. Method according to claim 7, wherein estimated waiting times for gaining access to a fuel pump or electrical charger for said vehicle energy supply stations (11, 12, 25, 26, 27) are determined based also on the number of other vehicles (11c-11d, 12e-12g) that are expected to stop at the vehicle energy supply stations (11, 12, 25, 26, 27) before estimated arrival time of the vehicle (1) at said vehicle energy supply stations (11, 12, 25, 26, 27).

9. Method according to claim 8, wherein estimated waiting times for gaining access to a fuel pump or electrical charger for said vehicle energy supply stations (11, 12, 25, 26, 27) are determined based also on expected time point of arrival at the vehicle energy supply stations (11, 12, 25, 26, 27) of said other vehicles (11c-11d, 12e-12g) that are expected to stop at the vehicle energy supply stations (11, 12, 25, 26, 27) before estimated arrival time of the vehicle (1) at said vehicle energy supply stations (11, 12, 25, 26, 27).

10. Method according to any of the preceding claims, comprising determining estimated waiting times for gaining access to a fuel pump or electrical charger only for those upcoming vehicle energy supply stations (11, 12, 25, 26, 27) that are located at a position associated with at least 5%, specifically at least 10%, remaining fuel content or electrical storage system charge level, or located at a position at least 20 km, specifically at least 40 km, before end of estimated driving range (10) of the vehicle (1).

11. Method according to any of the preceding claims, comprising determining estimated waiting times for gaining access to a fuel pump or electrical charger only for those upcoming vehicle energy supply stations (11, 12, 25, 26, 27) that are located at a position associated with less than 40%, specifically less than 30%, remaining fuel content or electrical storage system charge level, or located at a position less than 160 km, specifically less than 120 km, before end of estimated driving range (10) of the vehicle (1).

12. Method according to any of the preceding claims, wherein the step of identifying upcoming vehicle energy supply stations (11, 12, 25, 26, 27) along a planned driving route (13) of the vehicle (1) involves including vehicle energy supply stations (11, 12, 25, 26, 27) that are located displaced from the planned driving route (13) of the vehicle (1) and requires up to 100 km, specifically up to 50 km, and more specifically up to 20 km, extra travel distance for passing by, while still being within estimated driving range (10) of the vehicle (1),
determining estimated extra travel time for passing by said upcoming vehicle energy supply stations (11, 12, 25, 26, 27), and
controlling the low fuel or low charge warning trigger level of the low fuel or low charge warning system taking into account also the extra travel time for passing by said upcoming vehicle energy supply stations (11, 12, 25, 26, 27), for guiding the driver to select the vehicle energy supply station (11, 12, 25, 26, 27) having shortest combined estimated waiting time and estimated extra travel time.

13. Method according to any of the preceding claims, comprising,
when at least three upcoming vehicle energy supply stations (11, 12, 25, 26, 27) along a planned driving route (13) or in a traveling direction of the vehicle (1) are identified, which vehicle energy supply stations (11, 12, 25, 26, 27) are located within estimated driving range (10) of the vehicle (1) and at a position associated with at least 10%, specifically at least 15%, remaining fuel content or electrical storage system charge level or located at a position at least 40 km before end of estimated driving range (10) of the vehicle (1),
determining estimated waiting times for gaining access to a fuel pump or electrical charger only for the two or three upcoming vehicle energy supply stations (11, 12, 25, 26, 27) that are located closest to a position associated with 10%, specifically at least 15%, remaining fuel content or electrical storage system charge level, while being located at a position associated with at least 10%, specifically at least 15%, remaining fuel content or electrical storage system charge level.

14. Low fuel or low charge warning system (40) for a vehicle (1), the system comprising:
a low fuel or low charge warning indicating device (19),
a vehicle fuel tank (6) and/or vehicle electrical storage system (5),
one or more computer data storage devices (42) including geographical position information of vehicle energy supply stations (11, 12, 25, 26, 27) and information indicative of waiting times for gaining access to fuel pumps or electrical chargers at said vehicle energy supply stations (11, 12, 25, 26, 27),
a vehicle geographical position detection device (43), and
an electronic controller (44),
**characterised in that** the electronic controller (44) is configured for:
acquiring information about remaining fuel content of the vehicle fuel tank (6) or vehicle electrical storage system charge level and subsequently calculating an estimated driving range (10) of the vehicle (1),
acquiring geographical positioning information from the vehicle geographical position detection device (43) and monitoring vehicle geographical position and driving direction,
acquiring geographical position information of vehicle energy supply stations (11, 12, 25, 26, 27) from the one or more computer data storage devices (42) and identifying upcoming vehicle energy supply stations (11, 12, 25, 26, 27) along a planned driving route (13) or in a traveling direction of the vehicle (1) and within estimated driving range (10) of the vehicle (1),
acquiring information indicative of waiting times for gaining access to fuel pumps or electrical chargers at said upcoming vehicle energy supply stations (11, 12, 25, 26, 27) from said one or more computer data storage devices (42) and determining estimated waiting times for gaining access to a fuel pump or electrical charger for said upcoming vehicle energy supply stations (11, 12, 25, 26, 27), and
controlling a trigger level of the low fuel or low charge warning indicating device (19) while taking into account the estimated waiting times.

15. Vehicle (1) comprising a low fuel or low charge warning system (40), the system comprising:
a low fuel or low charge warning indicating device (19),
a vehicle fuel tank (6) and/or vehicle electrical storage system (5),
a vehicle geographical position detection device (43), and
an electronic controller (44),
**characterised in that** the electronic controller (44) is configured for:
acquiring information about remaining fuel content of the vehicle fuel tank (6) or vehicle electrical storage system charge level and subsequently calculating an estimated driving range (10) of the vehicle (1),
acquiring geographical positioning information from the vehicle geographical position detection device (43) and monitoring vehicle geographical position and driving direction,
acquiring geographical position information of vehicle energy supply stations (11, 12, 25, 26, 27) from one or more computer data storage devices (42) that includes geographical position information of vehicle energy supply stations (11, 12, 25, 26, 27) and information indicative of waiting times for gaining access to fuel pumps or electrical chargers at said vehicle energy supply stations (11, 12, 25, 26, 27), and identifying upcoming vehicle energy supply stations (11, 12, 25, 26, 27) along a planned driving route (13) or in a traveling direction of the vehicle (1) and within estimated driving range (10) of the vehicle (1),
acquiring information indicative of waiting times for gaining access to fuel pumps or electrical chargers at said upcoming vehicle energy supply stations (11, 12, 25, 26, 27) from said one or more computer data storage devices (42) and determining estimated waiting times for gaining access to a fuel pump or electrical charger for said upcoming vehicle energy supply stations (11, 12, 25, 26, 27), and
controlling a trigger level of the low fuel or low charge warning indicating device (19) while taking into account the estimated waiting times.
